# EUROPEAN PATENT APPLICATION

(11) **EP 4 830 989 A1**
(43) Date of publication of application: **28.10.2026**
(21) Application number: 26173566.6
(22) Date of filing: 21.04.2026
(51) Int. Cl.: B60N 2/02, B60N 2/06, B60N 2/10, B60N 2/12, B60N 2/16, B60N 2/18, B60N 2/56

(54) **VEHICLE SEAT**

(30) Priority: 23.04.2025 JP 2025071304
(71) Applicant: TS Tech Co., Ltd., Asaka-shi, Saitama 351-0012 (JP); Suzuki Motor Corporation, Hamamatsu-shi, Shizuoka 432-8611 (JP)
(72) Inventor: AOKI, Takahide, Tochigi, 329-1217 (JP); SUZUKI, Satoshi, Tochigi, 329-1217 (JP); MINESHIMA, Yudai, Hamamatsu-shi, 432-8611 (JP)
(74) Representative: Plougmann Vingtoft a/s

(57) **Abstract**

A vehicle seat (S) includes a seat cushion (S1), a blower (50) disposed at the seat cushion (S1), a first motor (60) disposed at the seat cushion (S1), and a second motor (70) disposed at the seat cushion (S1). The first motor (60) has a first housing (61). The second motor (70) has a second housing (71). The blower (50), the first housing (61), and the second housing (71) are disposed at a front portion of the seat cushion (S1). The first housing (61) and the second housing (71) are disposed on one side in a left-right direction with respect to the blower (50).

## Description

### TECHNICAL FIELD

The present invention relates to a vehicle seat.

### BACKGROUND ART

A vehicle seat known in the art includes a blower, a slide motor that causes a seat cushion to slide in a front-rear direction, and a seat front portion lifting motor that causes a front portion of the seat cushion to move in an up-down direction. The blower, the slide motor, and the seat front portion lifting motor are mounted to the seat cushion (JP2009-241682A). In this art, the blower is disposed in the vicinity of a central portion of the front portion of the seat cushion in the left-right direction. The slide motor is disposed on the left side of the front portion of the seat cushion. The seat front portion lifting motor is disposed on the right side of the front portion of the seat cushion.

### SUMMARY OF INVENTION

In such a configuration, when the blower and the two motors are disposed over a wide range of the seat cushion, it is difficult to compactly arrange harnesses connected to the blower and the two motors.

Therefore, it is desirable to arrange the harnesses compactly.

A vehicle seat includes a seat cushion, a blower disposed at the seat cushion, a first motor disposed at the seat cushion, and a second motor disposed at the seat cushion. The first motor has a first housing. The second motor has a second housing.

The blower, the first housing, and the second housing are disposed at a front portion of the seat cushion. The first housing and the second housing are disposed on one side in a left-right direction with respect to the blower.

In the configuration in which the blower, the first housing, and the second housing are disposed at the front portion of the seat cushion, and the first housing and the second housing are disposed on one side in the left-right direction with respect to the blower, the blower, the first motor, and the second motor are arranged in a concentrated manner. Accordingly, harnesses connected to the blower, the first motor, and the second motor are arranged in a concentrated manner, and thus the harnesses can be arranged compactly.

The first housing and the second housing may be disposed side-by-side in a front-rear direction.

With the first housing and the second housing being disposed side-by-side in the front-rear direction, the first motor and the second motor can be arranged compactly in the left-right direction.

The first motor may have a first rotary shaft, and the second motor may have a second rotary shaft. When the seat cushion is viewed from above, the first motor may be disposed such that the first rotary shaft is oriented in the left-right direction, and the second motor may be disposed such that the second rotary shaft is oriented in the front-rear direction.

With the first rotary shaft of the first motor being disposed in a manner oriented in the left-right direction, and the second rotary shaft of the second motor being disposed in a manner oriented in the front-rear direction, the first motor and the second motor that are disposed side-by-side in the front-rear direction can be arranged more compactly in the front-rear direction.

The first housing may be disposed forward of the second housing, and the second motor may be disposed in a state in which the second rotary shaft is inclined with respect to the front-rear direction.

In the configuration in which the first housing is disposed forward of the second housing, and the second rotary shaft of the second motor is disposed in a state of being inclined with respect to the front-rear direction, the first motor and the second motor that are disposed side-by-side in the front-rear direction can be arranged even more compactly in the front-rear direction.

When the seat cushion is viewed from above, the first housing and the second housing may be disposed side-by-side with the blower in the left-right direction, and the second housing may be disposed at a position farther, than the first housing, from the blower toward the one side in the left-right direction.

With the first housing and the second housing being disposed side-by-side with the blower in the left-right direction, and the second housing being disposed at a position farther, than the first housing, from the blower toward the one side in the left-right direction, a space is secured between the second motor and the blower. Accordingly, routing work of harnesses for the blower, the first motor, and the second motor is facilitated.

The first motor may have a first motor connector to which a first harness is connected, the second motor may have a second motor connector to which a second harness is connected, and the blower may have a blower connector to which a third harness is connected.

The first motor connector and the second motor connector may be disposed on the one side in the left-right direction with respect to the blower connector, and the second motor connector may be disposed on the one side in the left-right direction with respect to the first motor connector.

With the first motor connector and the second motor connector being disposed on the one side in the left-right direction with respect to the blower connector, and the second motor connector being disposed on the one side in the left-right direction with respect to the first motor connector, the positions of the first motor connector, the second motor connector, and the blower connector in the left-right direction are different from each other. Accordingly, routing work of harnesses for the blower, the first motor, and the second motor is facilitated.

The first motor connector may be located at an upper portion of the first motor, and the second motor connector may be located at a rear portion of the second motor.

With the first motor connector being located at the upper portion of the first motor and the second motor connector being located at the rear portion of the second motor, the first harness and the second harness are less likely to interfere with each other. Accordingly, routing work of harnesses for the first motor and the second motor is facilitated.

The first housing may be disposed rearward of a front end of the blower and forward of a rear end of the blower.

With the first housing being disposed rearward of the front end of the blower and forward of the rear end of the blower, the first motor and the blower are arranged compactly in the front-rear direction.

The first motor connector may be disposed at a position above the second motor connector and below the blower connector.

With the first motor connector being disposed at a position above the second motor connector and below the blower connector, the positions of the first motor connector, the second motor connector, and the blower connector in an up-down direction are different from each other. Accordingly, routing work of harnesses for the blower, the first motor, and the second motor is facilitated.

The second motor may have a second rotary shaft, and the second rotary shaft may be disposed such that the second rotary shaft is located on the one side in the left-right direction with respect to the first motor connector.

With the second rotary shaft of the second motor being disposed such that the second rotary shaft is located on the one side in the left-right direction with respect to the first motor connector, a space is secured between the second motor and the blower. Accordingly, routing work of harnesses for the blower, the first motor, and the second motor is facilitated.

The vehicle seat may further include a slide mechanism configured to support the seat cushion in a manner movable in the front-rear direction, and a tilt mechanism configured to support the front portion of the seat cushion in a manner movable in the up-down direction.

The first motor may be a motor that drives the slide mechanism, and the second motor may be a motor that drives the tilt mechanism.

Since the harnesses connected to the blower, the first motor, and the second motor are arranged in a concentrated manner, the harnesses are arranged compactly.

### BRIEF DESCRIPTION OF DRAWINGS

The above aspects, other advantages, and further features will become more apparent by describing in detail illustrative, non-limiting embodiments thereof with reference to the accompanying drawings, in which:
FIG. 1 is a perspective view showing a vehicle seat according to an embodiment.
FIG. 2 is a view of a seat cushion as viewed from above.
FIG. 3 is a perspective view showing a first motor and a first motor harness.
FIG. 4 is a view of a seat cushion as viewed from an inner side in the left-right direction, showing a blower, a first motor, and a second motor.
FIG. 5 is a view of a seat cushion as viewed from below.

### DESCRIPTION OF EMBODIMENTS

Next, an embodiment of the present disclosure will be described.

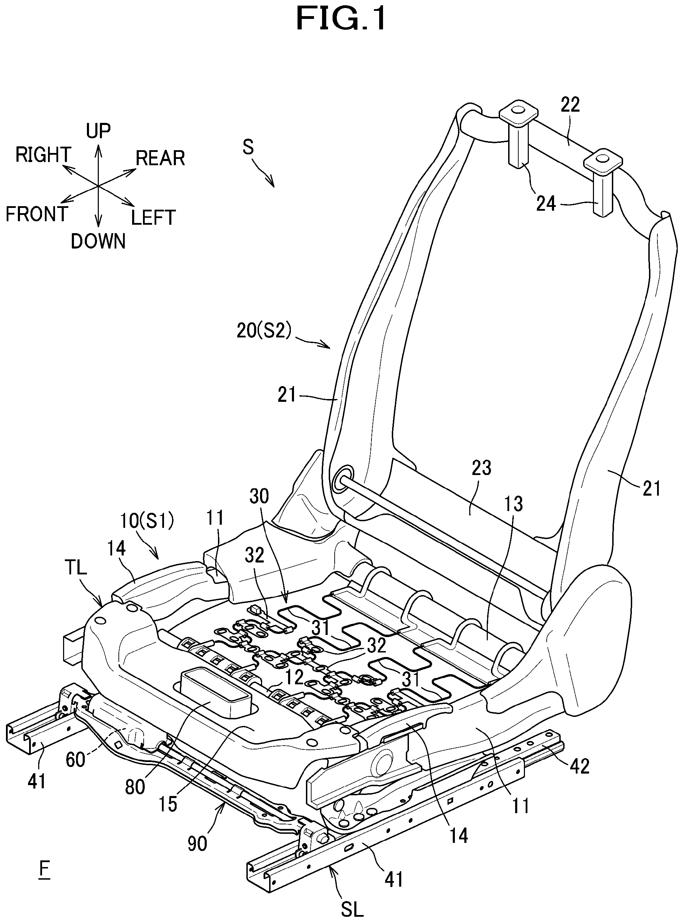

As shown in FIG. 1, a vehicle seat according to the embodiment is configured as a car seat S mounted on an automobile as an example of a vehicle. The car seat S includes a seat cushion S1, a seat back S2, and a headrest (not shown). In the present specification, front-rear, left-right, and up-down directions correspond to front-rear, left-right, and up-down directions as viewed from a person seated on the seat (an occupant).

The seat cushion S1 forms a seat bottom of the vehicle seat, and includes a seat cushion frame 10 and a pressure-receiving member 30. The seat cushion S1 is formed by covering the seat cushion frame 10 with a seat cushion pad (not shown) and a seat cushion outer covering (not shown). The term "seat cushion" refers to a seat bottom of a vehicle seat, regardless of whether it includes cushion material such as a seat cushion pad.

The seat cushion frame 10 includes left and right seat cushion side frames 11, a front frame 12, and a rear frame 13.

The seat cushion side frames 11 have shapes elongated in the front-rear direction. The left and right seat cushion side frames 11 are disposed at positions spaced apart from each other in the left-right direction. The front frame 12 connects front portions of the left and right seat cushion side frames 11. The rear frame 13 connects rear portions of the left and right seat cushion side frames 11. The front frame 12 and the rear frame 13 are disposed at positions spaced apart from each other in the front-rear direction.

The pressure-receiving member 30 is a member that receives a load from an occupant. The pressure-receiving member 30 includes a plurality of wires 31 and a plurality of plastic members 32. The wires 31 are made of metal wire rods. Each wire 31 extends in the front-rear direction while being alternately bent in the left-right direction. The wires 31 are disposed between the left and right seat cushion side frames 11 in a state of being bridged between the front frame 12 and the rear frame 13. The plurality of wires 31 are disposed side-by-side in the left-right direction. The plastic members 32 are made of plastic. Each plastic member 32 is integrally formed with the corresponding wire 31 by insert molding in a state in which the plastic member 32 covers an entire circumference of a portion of the wire 31. The plastic members 32 are provided to connect a plurality of wires 31, or to connect one portion and another portion of a single wire 31.

The seat back S2 includes a seat back frame 20. The seat back S2 is formed by covering the seat back frame 20 with a seat back pad (not shown) and a seat back outer covering (not shown).

The seat back frame 20 includes left and right seat back side frames 21, an upper frame 22, and a lower frame 23.

The seat back side frames 21 have shapes elongated in the up-down direction. The left and right seat back side frames 21 are disposed at positions spaced apart from each other in the left-right direction. The upper frame 22 connects upper portions of the left and right seat back side frames 21. The lower frame 23 connects lower portions of the left and right seat back side frames 21. The upper frame 22 and the lower frame 23 are disposed at positions spaced apart from each other in the up-down direction. A pair of headrest holders 24 for holding the headrest are fixed to the upper frame 22.

The car seat S further includes a slide mechanism SL and a tilt mechanism TL.

The slide mechanism SL is a mechanism that supports the seat cushion S1 in a manner that allows the seat cushion S1 to move in the front-rear direction. The slide mechanism SL includes left and right lower rails 41 and left and right upper rails 42. The lower rails 41 are fixed to a floor F of the automobile. The upper rails 42 are supported by the lower rails 41 in a slidable manner. The upper rails 42 are connected to the seat cushion side frames 11. In the car seat S, the seat cushion S1 is movable in the front-rear direction by a first motor 60 moving the upper rails 42 in the front-rear direction.

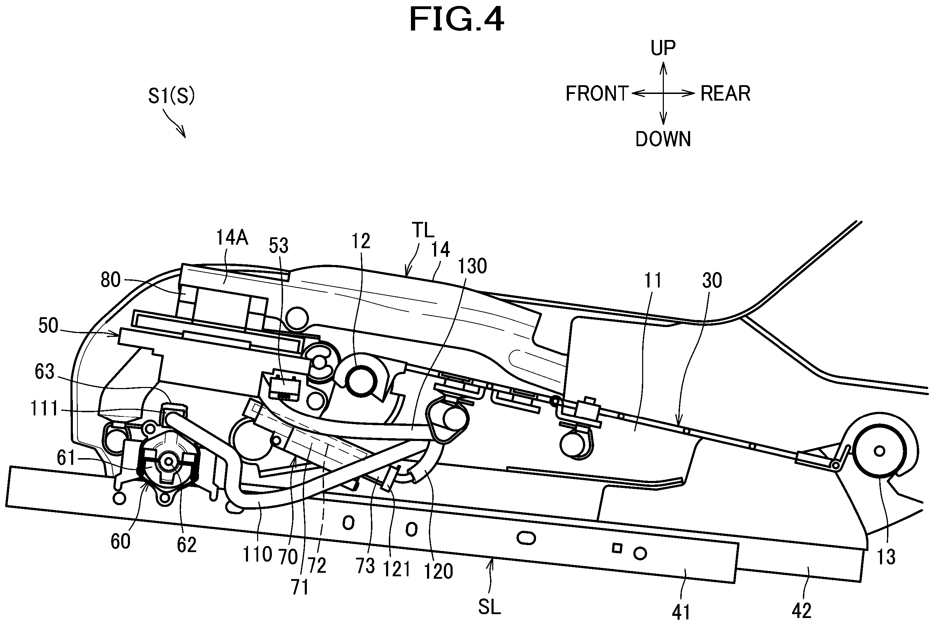

The tilt mechanism TL is a mechanism that supports the front portion of the seat cushion S1 in a manner that allows the seat cushion S1 to move in the up-down direction. The tilt mechanism TL includes left and right tilt links 14 and a pan frame 15. Each tilt link 14 has a rear end portion pivotably connected to the seat cushion side frame 11 so that a front portion 14A thereof (see FIG. 4) is pivotable in the up-down direction. The pan frame 15 is fixed to the tilt links 14. In the car seat S, the front portion of the seat cushion S1 is movable in the up-down direction by a second motor 70 pivoting the front portions 14A of the tilt links 14 in the up-down direction (see FIG. 4).

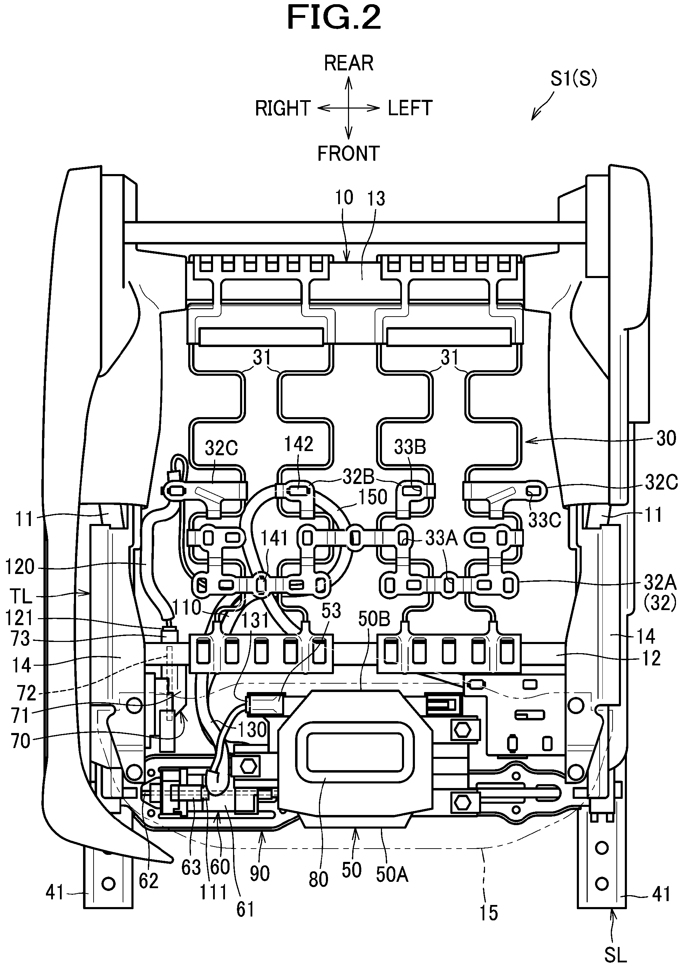

As shown in FIG. 2, the plastic members 32 of the pressure-receiving member 30 include a first plastic member 32A, two second plastic members 32B, and two third plastic members 32C. The first plastic member 32A, the second plastic members 32B, and the third plastic members 32C have plate shapes. The first plastic member 32A, the second plastic members 32B, and the third plastic members 32C are disposed rearward of the front frame 12. The first plastic member 32A, the second plastic members 32B, and the third plastic members 32C are disposed between the front frame 12 and the rear frame 13. The first plastic member 32A, the second plastic members 32B, and the third plastic members 32C are disposed closer to the front frame 12 than to the rear frame 13.

The first plastic member 32A connects four wires 31. The first plastic member 32A has a shape extending in the left-right direction while being alternately bent in the front-rear direction. The first plastic member 32A has a plurality of through holes 33A extending in the up-down direction.

The second plastic members 32B and the third plastic members 32C are disposed rearward of the first plastic member 32A. The second plastic members 32B and the third plastic members 32C are disposed side-by-side in the left-right direction.

Each second plastic member 32B connects portions of one of two wires 31 located in a central portion in the left-right direction, i.e., a portion extending in the left-right direction and a portion extending in the front-rear direction. The second plastic member 32B has an L-shape. The second plastic member 32B has a through hole 33B extending in the up-down direction.

The third plastic members 32C are disposed at the left and right outer sides of the two second plastic members 32B, respectively. Each third plastic member 32C connects portions of one of two wires 31 located at the outer sides of the seat cushion S1 in the left-right direction, i.e., a portion extending in the left-right direction and a portion extending in the front-rear direction. The third plastic member 32C has a T-shape. The third plastic member 32C has a through hole 33C extending in the up-down direction at a left or right outer end portion.

The car seat S further includes a blower 50, a first motor 60, and a second motor 70.

The blower 50 is, for example, a sirocco fan. The blower 50 is disposed under the pan frame 15 and is fixed to the pan frame 15. The seat cushion S1 is configured such that air discharged from the blower 50 passes through a duct 80 connected to the blower 50 and a ventilation passage formed in the seat cushion pad, and is blown out from an upper surface of the seat cushion S1 toward an occupant. Alternatively, the blower 50 may be configured to be a blower 50 that draws air from the seat cushion S1 side into the duct 80.

The blower 50 has a blower connector 53. The blower connector 53 is a connector to which a blower harness 130 as a third harness is connected. Specifically, a harness connector 131 fixed to one end of the blower harness 130 is connected to the blower connector 53. The blower harness 130 is a harness for supplying electric power to the blower 50.

The first motor 60 is a motor that drives the slide mechanism SL. The first motor 60 is fixed to the upper rails 42 (see FIG. 1) of the slide mechanism SL via a bracket 90. Specifically, the bracket 90 is made of a metal plate and extends in the left-right direction. The bracket 90 is fixed to the left and right upper rails 42 in a state of being bridged between the left and right upper rails 42. The first motor 60 is fixed to the bracket 90.

The first motor 60 has a first housing 61 and a first rotary shaft 62.

The first housing 61 houses a first drive unit (not shown) that generates a driving force by electric power supplied to the first motor 60. In other words, the first drive unit is provided in the first housing 61. The first drive unit includes a first stator (first fixed element) having a coil that generates a magnetic flux by electric power, and a first rotor (first movable element) that generates a driving force (rotational force) by the action of the magnetic flux. The first movable element is supported via a bearing or the like in a rotatable manner with respect to the first fixed element. The first rotary shaft 62 is fixed to the first movable element.

The first rotary shaft 62 outputs the driving force generated by the first drive unit.

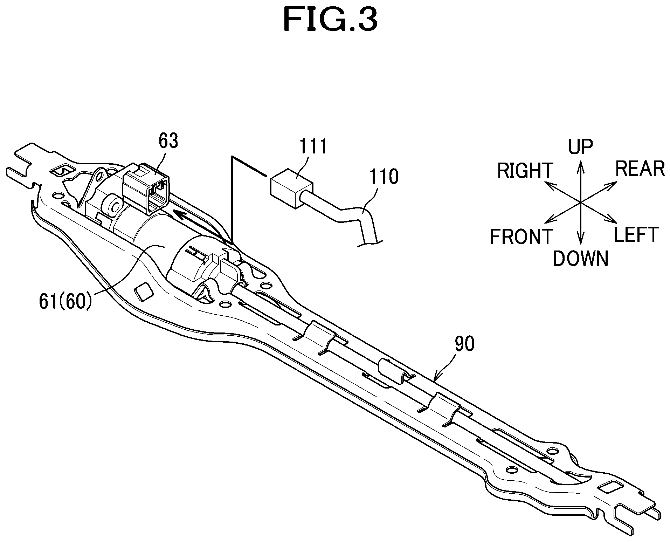

As shown in FIG. 3, the first motor 60 further has a first motor connector 63.

The first motor connector 63 is a connector to which a first motor harness 110 as a first harness is connected. Specifically, a harness connector 111 fixed to one end of the first motor harness 110 is connected to the first motor connector 63. The first motor harness 110 is a harness for supplying electric power to the first motor 60. The first motor connector 63 is located at an upper portion of the first motor 60. Specifically, the first motor connector 63 is located at an upper end portion of the first motor 60. The first motor connector 63 is provided above the first housing 61.

As shown in FIG. 4, the second motor 70 is a motor that drives the tilt mechanism TL. The second motor 70 is disposed inward of the right seat cushion side frame 11 in the left-right direction and is fixed to the right seat cushion side frame 11.

The second motor 70 has a second housing 71 and a second rotary shaft 72.

The second housing 71 houses a second drive unit (not shown) that generates a driving force by electric power supplied to the second motor 70. In other words, the second drive unit is provided in the second housing 71. The second drive unit includes a second stator (second fixed element) having a coil that generates a magnetic flux by electric power, and a second rotor (second movable element) that generates a driving force (rotational force) by the action of the magnetic flux. The second movable element is supported via a bearing or the like in a manner rotatable with respect to the second fixed element. The second rotary shaft 72 is fixed to the second movable element.

The second rotary shaft 72 outputs the driving force generated by the second drive unit.

The second motor 70 further has a second motor connector 73.

The second motor connector 73 is a connector to which a second motor harness 120 as a second harness is connected. Specifically, a harness connector 121 fixed to one end of the second motor harness 120 is connected to the second motor connector 73. The second motor harness 120 is a harness for supplying electric power to the second motor 70. The second motor connector 73 is located at a rear portion of the second motor 70. Specifically, the second motor connector 73 is located at a rear end portion of the second motor 70. The second motor connector 73 is provided rearward of the second housing 71.

As shown in FIG. 2, the blower 50, the first motor 60, and the second motor 70 are disposed at the seat cushion S1. Specifically, the blower 50, the first housing 61 of the first motor 60, and the second housing 71 of the second motor 70 are disposed at the front portion of the seat cushion S1. More specifically, the blower 50, the first housing 61, and the second housing 71 are disposed forward of a central portion of the seat cushion frame 10 in the front-rear direction. The blower 50, the first housing 61, and the second housing 71 are disposed forward of a central portion of the seat cushion side frames 11 in the front-rear direction.

When the seat cushion S1 is viewed from above, the blower 50, the first housing 61, and the second housing 71 are disposed between the left and right seat cushion side frames 11. The blower 50, the first housing 61, and the second housing 71 are disposed under the pan frame 15. A front end portion of the second housing 71 is disposed under the pan frame 15.

The blower 50 and the first housing 61 are disposed forward of the front frame 12. The blower 50 is disposed forward of the front frame 12, and the first housing 61 is disposed diagonally forward and downward of the front frame 12 (see FIG. 4). The second housing 71 is disposed below the front frame 12.

When the seat cushion S1 is viewed from above, the blower 50 is disposed at a central portion of the seat cushion S1 in the left-right direction. The first housing 61 and the second housing 71 are disposed on one side in the left-right direction with respect to the blower 50. In the embodiment, the first housing 61 and the second housing 71 are disposed on a right side with respect to the blower 50. When the seat cushion S1 is viewed from above, the first housing 61 and the second housing 71 are disposed side-by-side with the blower 50 in the left-right direction. The first housing 61 and the second housing 71 are disposed side-by-side in the front-rear direction (see also FIG. 4).

When the seat cushion S1 is viewed from above, the first motor 60 is disposed such that the first rotary shaft 62 is oriented in the left-right direction. The first motor 60 is elongated in the left-right direction. The first housing 61 is disposed forward of the second housing 71. The first housing 61 is disposed rearward of a front end 50A of the blower 50. The first housing 61 is disposed forward of a rear end 50B of the blower 50. In other words, the first housing 61 is disposed at a position between the front end 50A and the rear end 50B of the blower 50 in the front-rear direction.

When the seat cushion S1 is viewed from above, the second motor 70 is disposed such that the second rotary shaft 72 is oriented in the front-rear direction. The second motor 70 is elongated in the front-rear direction. When the seat cushion S1 is viewed from above, the second housing 71 is disposed at a position farther from the blower 50 toward the one side in the left-right direction than the first housing 61. In the embodiment, the second housing 71 is disposed at a position farther from the blower 50 toward the right side than the first housing 61. The second housing 71 is disposed rearward of a right end portion of the first housing 61. The second motor 70 is disposed such that the second rotary shaft 72 is disposed on the one side in the left-right direction with respect to the first motor connector 63 of the first motor 60. In the embodiment, the second motor 70 is disposed such that the second rotary shaft 72 is disposed on the right side of the first motor connector 63.

The first motor connector 63 and the second motor connector 73 are disposed on the one side in the left-right direction with respect to the blower connector 53. The second motor connector 73 is disposed on the one side in the left-right direction with respect to the first motor connector 63. In the embodiment, the first motor connector 63 and the second motor connector 73 are disposed on the right side of the blower connector 53. The second motor connector 73 is disposed on the right side of the first motor connector 63.

As shown in FIG. 4, the second motor 70 is disposed in a state in which the second rotary shaft 72 is inclined with respect to the front-rear direction. In the embodiment, the second motor 70 is disposed in a state of being inclined such that a front end portion of the second rotary shaft 72 is located above a rear end portion thereof.

The first motor connector 63 is disposed above the second motor connector 73. The first motor connector 63 is disposed below the blower connector 53. In other words, in the up-down direction, the first motor connector 63 is disposed at a position between the blower connector 53 and the second motor connector 73.

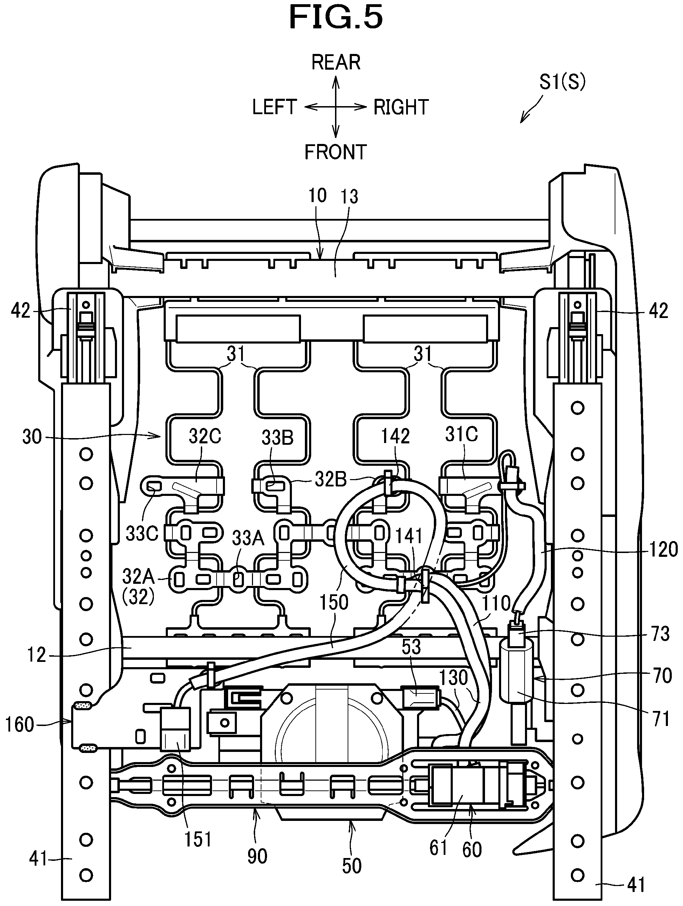

As shown in FIG. 5, a first motor harness 110 connected to the first motor connector 63 (see FIG. 3), a second motor harness 120 connected to the second motor connector 73, and a blower harness 130 connected to the blower connector 53 are bundled by one harness clip 141 rearward of the blower connector 53. The harness clip 141 is inserted into the through hole 33A of the first plastic member 32A and is attached to the first plastic member 32A.

In the embodiment, the harnesses 110 to 130 are bundled together as one harness 150 on the left side of the harness clip 141. The harness 150 is curved in a manner that bulges leftward and rearward from a connection portion with the harnesses 110 to 130, and is held by a harness clip 142 at a position rearward and in the vicinity of the connection portion with the harnesses 110 to 130. The harness clip 142 is inserted into the through hole 33B of the right second plastic member 32B and is attached to the right second plastic member 32B. The harness 150 extends diagonally forward and leftward from the harness clip 142, passing through the vicinity of a lower side of the harness clip 141, and is connected to a connector 151.

The connector 151 is disposed on the other side in the left-right direction with respect to the blower 50. In the embodiment, the connector 151 is disposed on the left side of the blower 50. The connector 151 is fixed to a bracket 160. The bracket 160 is fixed to the left lower rail 41. In the embodiment, the bracket 160 is fixed to a lower surface of a front portion of the left lower rail 41 by welding. A harness for supplying electric power from a battery of the automobile to the blower 50, the first motor 60, and the second motor 70 is connected to the connector 151.

Next, advantageous effects of the embodiment will be described.

In the configuration in which the blower 50, the first housing 61, and the second housing 71 are disposed at the front portion of the seat cushion S1, and the first housing 61 and the second housing 71 are disposed on the right side of the blower 50, the blower 50, the first motor 60, and the second motor 70 are arranged in a concentrated manner. Accordingly, the harnesses 110 to 130 connected to the blower 50, the first motor 60, and the second motor 70 are arranged in a concentrated manner, and thus the harnesses 110 to 130 can be arranged compactly.

Further, with the blower 50, the first housing 61, and the second housing 71 being arranged in a concentrated manner from the central portion to the right side in the front portion of the seat cushion S1, it becomes easier, for example, to dispose a member different from the blower 50, the first motor 60, and the second motor 70 between the left side of the front portion of the seat cushion S1 and the floor F (see FIG. 1) of the automobile, or between a rear portion of the seat cushion S1 and the floor F.

With the first housing 61 and the second housing 71 being disposed side-by-side in the front-rear direction, the first motor 60 and the second motor 70 can be arranged compactly in the left-right direction.

With the first rotary shaft 62 of the first motor 60 being disposed in a manner oriented in the left-right direction, and the second rotary shaft 72 of the second motor 70 being disposed in a manner oriented in the front-rear direction, the first motor 60 and the second motor 70 that are disposed side-by-side in the front-rear direction can be arranged compactly in the front-rear direction.

In the configuration in which the first housing 61 is disposed forward of the second housing 71, and the second rotary shaft 72 of the second motor 70 is disposed in a state of being inclined with respect to the front-rear direction, the first motor 60 and the second motor 70 that are disposed side-by-side in the front-rear direction can be arranged even more compactly in the front-rear direction.

With the first housing 61 and the second housing 71 being disposed side-by-side with the blower 50 in the left-right direction, and the second housing 71 being disposed at a position farther from the blower 50 toward the right side than the first housing 61, a space is secured between the second motor 70 and the blower 50. Accordingly, routing work of the harnesses 110 to 130 for the blower 50, the first motor 60, and the second motor 70 is facilitated. In other words, the installation of the harnesses 110 to 130 in the seat cushion S1 is facilitated.

With the first motor connector 63 and the second motor connector 73 being disposed on the right side with respect to the blower connector 53, and the second motor connector 73 being disposed on the right side with respect to the first motor connector 63, the positions of the first motor connector 63, the second motor connector 73, and the blower connector 53 in the left-right direction are different from each other. Accordingly, routing work of the harnesses 110 to 130 for the blower 50, the first motor 60, and the second motor 70 is facilitated.

With the first motor connector 63 being located at the upper portion of the first motor 60, and the second motor connector 73 being located at the rear portion of the second motor 70, the first motor harness 110 and the second motor harness 120 are less likely to interfere with each other. Accordingly, routing work of the harnesses 110 and 120 for the first motor 60 and the second motor 70 is facilitated.

With the first housing 61 being disposed rearward of the front end 50A of the blower 50 and forward of the rear end 50B of the blower 50, the first motor 60 and the blower 50 can be arranged compactly in the front-rear direction.

With the first motor connector 63 being disposed above the second motor connector 73 and below the blower connector 53, the positions of the first motor connector 63, the second motor connector 73, and the blower connector 53 in the up-down direction are different from each other. Accordingly, routing work of the harnesses 110 to 130 for the blower 50, the first motor 60, and the second motor 70 is facilitated.

With the second rotary shaft 72 of the second motor 70 being disposed on the right side with respect to the first motor connector 63, a space is secured between the second motor 70 and the blower 50. Accordingly, routing work of the harnesses 110 to 130 for the blower 50, the first motor 60, and the second motor 70 is facilitated.

Although the embodiment has been described above, the vehicle seat can be appropriately modified and implemented as exemplified below.

In the embodiment, the first housing 61 is disposed forward of the second housing 71. However, for example, the first housing may be disposed rearward of the second housing.

In the embodiment, the first housing 61 and the second housing 71 are disposed side-by-side in the front-rear direction. However, for example, the second housing may be disposed on the one side in the left-right direction with respect to the first housing. In other words, the first housing may be disposed at a position between the blower and the second housing in the left-right direction.

In the embodiment, the second housing 71 is disposed at a position farther from the blower 50 toward the one side in the left-right direction than the first housing 61. However, for example, the first housing may be disposed at a position farther from the blower toward the one side in the left-right direction than the second housing. In other words, the second housing may be disposed at a position between the blower and the first housing in the left-right direction. Further, for example, the first housing and the second housing may be disposed side-by-side in the left-right direction.

In the embodiment, the second motor connector 73 is disposed on the one side in the left-right direction with respect to the first motor connector 63. However, for example, when the seat cushion is viewed from above, the first motor connector and the second motor connector may be disposed side-by-side in the front-rear direction. Further, for example, when the seat cushion is viewed from above, the first motor connector and the second motor connector may be disposed side-by-side in the left-right direction.

In the embodiment, the first housing 61 and the second housing 71 are disposed on the right side of the blower 50. However, for example, the first housing and the second housing may be disposed on the left side of the blower. Similarly, in the embodiment, the first motor connector 63 and the second motor connector 73 are disposed on the right side of the blower connector 53. However, for example, the first motor connector and the second motor connector may be disposed on the left side of the blower connector. As an example, the vehicle seat may have a structure that is symmetric with the car seat S described in the embodiment in the left-right direction.

In the embodiment, the vehicle seat is the car seat S mounted on an automobile. However, the vehicle seat may be a vehicle seat mounted on a vehicle other than an automobile, such as a railway car, a ship, or an aircraft.

The elements described in the above example embodiment and its modified examples may be implemented selectively and in combination.

## Claims

1. A vehicle seat comprising:
a seat cushion (S1);
a blower (50) disposed at the seat cushion (S1);
a first motor (60) disposed at the seat cushion (S1), the first motor (60) comprising a first housing (61); and
a second motor (70) disposed at the seat cushion (S1), the second motor (70) comprising a second housing (71),
wherein the blower (50), the first housing (61) and the second housing (71) are disposed at a front portion of the seat cushion (S1), and
wherein the first housing (61) and the second housing (71) are disposed on one side in a left-right direction with respect to the blower (50).

2. The vehicle seat according to claim 1, wherein the first housing (61) and the second housing (71) are disposed side-by-side in a front-rear direction.

3. The vehicle seat according to claim 2, wherein
the first motor (60) comprises a first rotary shaft (62),
the second motor (70) comprises a second rotary shaft (72), and
when the seat cushion (S1) is viewed from above:
the first motor (60) is disposed such that the first rotary shaft (62) is oriented in the left-right direction; and
the second motor (70) is disposed such that the second rotary shaft (72) is oriented in the front-rear direction.

4. The vehicle seat according to claim 3,
wherein the first housing (61) is disposed forward of the second housing (71), and
wherein the second motor (70) is disposed such that the second rotary shaft (72) is inclined with respect to the front-rear direction.

5. The vehicle seat according to claim 3, wherein when the seat cushion (S1) is viewed from above:
the first housing (61) and the second housing (71) are disposed side-by-side with the blower (50) in the left-right direction; and
the second housing (71) is disposed at a position farther, than the first housing (61), from the blower (50) toward the one side in the left-right direction.

6. The vehicle seat according to claim 1, wherein
the first motor (60) comprises a first motor connector (63) to which a first harness (110) is connected,
the second motor (70) comprises a second motor connector (73) to which a second harness (120) is connected,
the blower (50) further comprises a blower connector (53) to which a third harness (130) is connected,
the first motor connector (63) and the second motor connector (73) are disposed on the one side in the left-right direction with respect to the blower connector (53), and
the second motor connector (73) is disposed on the one side in the left-right direction with respect to the first motor connector (63).

7. The vehicle seat according to claim 6, wherein
the first motor connector (63) is located at an upper portion of the first motor (60), and
the second motor connector (73) is located at a rear portion of the second motor (70).

8. The vehicle seat according to claim 1, wherein the first housing (61) is disposed rearward of a front end of the blower (50) and forward of a rear end of the blower (50).

9. The vehicle seat according to claim 6, wherein the first motor connector (63) is disposed at a position above the second motor connector (73) and below the blower connector (53).

10. The vehicle seat according to claim 6, wherein
the second motor (70) comprises a second rotary shaft (72), and
the second motor (70) is disposed such that the second rotary shaft (72) is located on the one side in the left-right direction with respect to the first motor connector (63).

11. The vehicle seat according to claim 1, comprising:
a slide mechanism (SL) configured to support the seat cushion (S1) in a manner that allows the seat cushion (S1) to move in the front-rear direction; and
a tilt mechanism (TL) configured to support a front portion of the seat cushion (S1) in a manner that allows the seat cushion (S1) to move in an up-down direction,
wherein the first motor (60) is a motor configured to drive the slide mechanism (SL), and
wherein the second motor (70) is a motor configured to drive the tilt mechanism (TL).
